# EUROPEAN PATENT SPECIFICATION

(11) **EP 3 151 386 B1**
(45) Date of publication and mention of the grant of the patent: **31.10.2018**
(21) Application number: 16191377.7
(22) Date of filing: 29.09.2016
(51) Int. Cl.: H02K 1/27

(54) **PERMANENT MAGNET ROTOR AND PERMANENT MAGNET ROTATING ELECTRICAL MACHINE**
PERMANENTMAGNETROTOR UND ROTIERENDE ELEKTRISCHE PERMAMENTMAGNETVORRICHTUNG
ROTOR A AIMANT PERMANENT ET MACHINE TOURNANTE ELECTRIQUE A AIMANT PERMANENT

(30) Priority: 02.10.2015 JP 2015196916
(43) Date of publication of application: 05.04.2017
(73) Proprietor: Kabushiki Kaisha Toshiba, Tokyo 105-8001 (JP)
(72) Inventor: Fukumoto, Syou, Tokyo, 104-0031 (JP); Matsushita, Makoto, Tokyo, 105-8001 (JP); Takeuchi, Katsutoku, Tokyo, 105-8001 (JP); Hasebe, Toshio, Tokyo, 105-8001 (JP)
(74) Representative: Hoffmann Eitle

(56) References cited:
- JP-A- H10 271 722
- JP-A- 2012 161 228
- US-A1- 2014 346 911

## Description

### FIELD

The present embodiments relates to a permanent magnet rotor and a permanent magnet rotating electrical machine.

### BACKGROUND

A permanent magnet rotating electrical machine has a rotor and a stator. Flux barriers are formed in a rotor core provided outside a rotor shaft of the rotor radially. The flux barriers serve as magnetic barriers in each circumferential angle region of the rotor core. Permanent magnet is provided in a circumferential center region of each of the flux barriers. The permanent magnet has a cross-sectional shape of an arc shape or a rectangular shape as viewed in an axial section thereof.

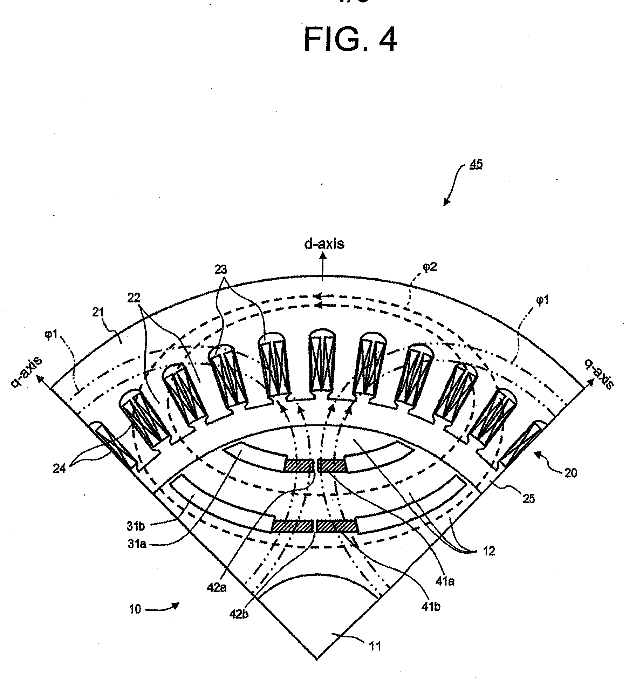

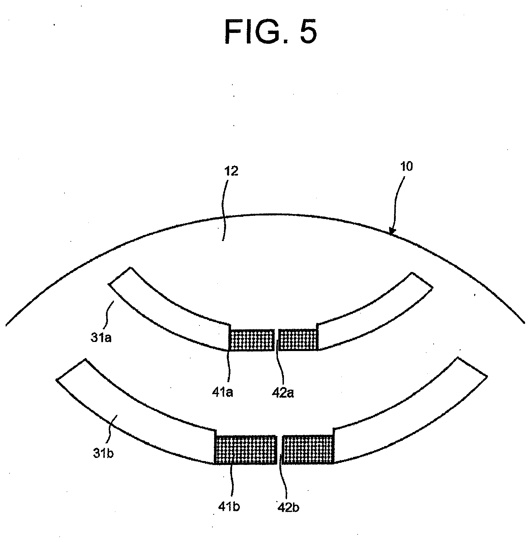

FIG. 4 is a quarter part of a cross-sectional view of a conventional permanent magnet rotating electrical machine as viewed in a direction perpendicular to the rotary axis thereof, which illustrates a 1/4 range circumferentially. FIG. 5 is a partial sectional view illustrating through holes formed in the rotor core and permanent magnets in the example of the conventional permanent magnet rotating electrical machine, showing cross section as viewed in a direction perpendicular to the rotary axis thereof. In a permanent magnet rotating electrical machine 45 illustrated in FIGS. 4 and 5, the flux barrier as a magnetic barrier is formed in each of circumferential angle regions of a rotor core 12 provided radially outside a rotor shaft 11 of a rotor 10. The flux barrier includes, in each of the circumferential angle regions of the rotor core 12, radially outer flux barriers 31a located radially outer position and radially inner flux barriers 31b located radially inner position.

A permanent magnet 41a is provided in a circumferential center of the radially outer flux barriers 31a, and a permanent magnet 41b is provided in a circumferential center of the radially inner flux barriers 31b. The permanent magnets 41a and 41b are those formed of the same material such as a ferrite magnet or a rare earth magnet.

The permanent magnet 41a is circumferentially divided into two parts interposing a bridge 42a. Similarly, the permanent magnet 41b is circumferentially divided into two parts interposing a bridge 42b. The bridges 42a and 42b are provided for compensating for reduction in a structural strength due to a cut portion formed for providing the respective permanent magnets 41a and 41b in the rotor core 12. Thus, the bridges 42a and 42b have lengths equal to the thicknesses of the respective permanent magnets 41a and 41b.

Further permanent magnet machines are described in US 2014/346911 A1 and JP 2012 161228 A.

### BRIEF DESCRIPTION OF THE DRAWINGS

FIG. 1 is a quarter part of a cross-sectional view of a permanent magnet rotating electrical machine according to an embodiment as viewed in a direction perpendicular to a rotary axis thereof.
FIG. 2 is a partial cross-sectional view of through holes formed in the permanent magnet rotating electrical machine according to the embodiment, as viewed in the direction perpendicular to the rotary axis thereof.
FIG. 3 is a view illustrating an example of magnetic history curve of a permanent magnet.
FIG. 4 is a quarter part of a cross-sectional view of a conventional permanent magnet rotating electrical machine as viewed in the direction perpendicular to the rotary axis thereof, which illustrates a 1/4 range in a circumferential direction.
FIG. 5 is a partial sectional view illustrating a through hole formed in the rotor core and a permanent magnet in the example of the conventional permanent magnet rotating electrical machine, showing cross section as viewed in a direction perpendicular to the rotary axis.

### DETAILED DESCRIPTION

It is known that the reluctance torque can be maximized when the radially outer flux barriers 31a and radially inner flux barriers 31b are formed into substantially elliptical arc shape following a flow of a q-axis magnetic flux as illustrated in FIG. 4. However, a reverse magnetic field generated by armature reaction generally becomes smaller at more radially inward. In a conventional approach, the radially inner magnet and the radially outer magnet are the same type, causing nonuniformity in demagnetization resistance. That is, when the demagnetization resistance of a permanent magnet disposed radially outer side is ensured, the demagnetization resistance of the permanent magnet disposed inside radially becomes excessive. In particular, when a magnet having a high coercive force (neodymium magnet having a high Dy (dysprosium) content) is used in order to ensure the demagnetization resistance radially outside, a sufficient cost reduction cannot be achieved since such a magnet is expensive.

The present embodiment has been made to solve such a problem, and the object thereof is to achieve cost reduction while ensuring the demagnetization resistance of the permanent magnets in the permanent magnet rotating electrical machine.

This object is accomplished by the permanent magnet rotor according to claim 1. The dependent claims concern particular embodiments.

There is provided a permanent magnet rotating electrical machine (100) comprising: a rotor shaft rotatably supported and extending axially at its rotation axis; a rotor core in which flux barriers are formed in each circumferential angle region so as to extend axially while spreading circumferentially toward the rotation axis center in a convex curved shape, and a permanent magnet spaces are formed in a circumferential direction center portion of each of the flux barriers, the rotor core being fixed to the rotor shaft and having a plurality of flat steel plates laminated axially; permanent magnets disposed in the respective permanent magnet spaces, demagnetization resistance of the permanent magnets decreasing monotonically from outer side to inner side in a radial direction; a stator core disposed outside of the rotor core with a gap therebetween, the stator core including a plurality of stator teeth spaced apart from each other circumferentially and formed, the stator teeth extending axially and protruding radially inward; and armature windings wound around the stator teeth.

There is provided a a permanent magnet rotating electrical machine (100) comprising: the permanent magnet rotor (10); and a stator core disposed outside of the rotor core with a gap therebetween, the stator core including a plurality of stator teeth spaced apart from each other circumferentially, the stator teeth extending axially and protruding radially inward, and armature windings wound around the stator teeth. Hereinafter, with reference to the accompanying drawings, permanent magnet rotating electrical machines of embodiments of the present invention will be described. The same or similar portions are represented by the same reference symbols and will not be described repeatedly.

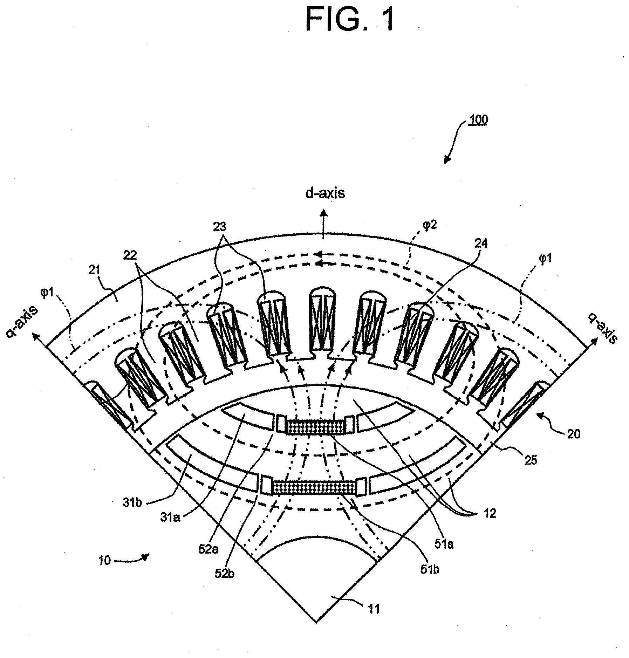

FIG. 1 is a quarter part of a cross-sectional view of a permanent magnet rotating electrical machine according to an embodiment as viewed in a direction perpendicular to a rotary axis thereof, which illustrates only a 1/4 sector,
that is, a 1/4 circumferential angle region of a permanent magnet rotating electrical machine 100. In this case, the permanent magnet rotating electrical machine 100 has four poles. The permanent magnet rotating electrical machine 100 has a rotor 10 and a stator 20.

The rotor 10 has a rotor shaft 11 and a rotor core 12. The rotor shaft 11 extends in a direction along a rotary axis (axial direction) of the rotor 10. The rotor core 12 is disposed around the rotor shaft 11 radially and has a plurality of axially laminated steel plates. The rotor core 12 has a cylindrical outer shape.

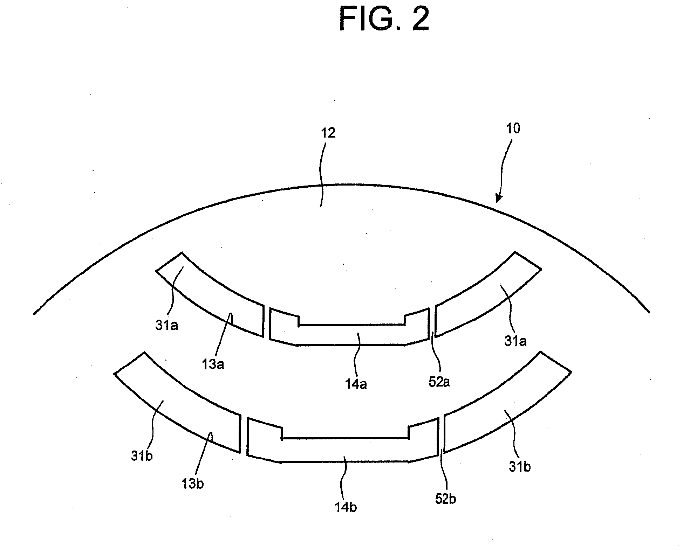

FIG. 2 is a partial cross-sectional view of through holes formed in the permanent magnet rotating electrical machine according to the embodiment, as viewed in the direction perpendicular to the rotary axis thereof. FIG. 2 illustrates two through holes 13a and 13b formed radially in each circumferential angle region of the rotor core 12. The through holes 13a and 13b extend axially while spreading circumferentially in a convex curved shape toward a center of a rotation axis. The through holes 13a and 13b are formed in parallel to each other. Center regions of the respective through holes 13a and 13b serve as permanent magnet spaces 14a and 14b in which permanent magnets 51a and 51b (FIG. 1) each having a sectional area corresponding to each region are provided. Regions on both sides of the permanent magnet space 14a in the through hole 13a are regions where radially outer flux barriers 31a are formed. Regions on both sides of the permanent magnet space 14b in the through hole 13b are regions where radially inner flux barriers 31b are formed.

In each of the radially outer flux barriers 31a, a bridge 52a is formed. The bridge 52a connects a radially inner portion of the rotor core 12 to the radially outer flux barrier 31a and a radially outer portion of the rotor core 12 to the radially outer flux barrier 31a with the radially outer flux barrier 31a interposed therebetween. That is, the radially inner portion of the rotor core 12 and the radially outer portion thereof of the radially outer flux barrier 31a are connected by the bridge 52a.

Similarly, in each of the radially inner flux barriers 31b, at the opposite sides of the permanent magnet 51b, a bridge 52b is formed. The bridge 52b connects a radially inner part of the rotor core 12 of the radially inner flux barrier 31b and a radially outer part of the rotor core 12 of radially inner flux barrier 31b with the radially inner flux barrier 31b interposed therebetween. That is, the inner part of the rotor core 12 and the outer part thereof in the radial direction of the radially inner flux barrier 31b are connected by the bridge 52b.

In the above example, the flux barriers and permanent magnets are each arranged in two rows in the radial direction, but not limited thereto. The flux barriers and permanent magnets may each be arranged radially in three or more rows.

In the above-described conventional approach, the bridge has a length equal to the thickness of the permanent magnet, as illustrated in FIG. 5. In the present embodiment, the bridge has a length equal to the width of the flux barrier and larger than the width of the permanent magnet. Making the length of the bridge larger increases the magnetic resistance of the bridge. As a result, leakage flux can be reduced. Further, forming the bridge on both sides of the magnet eliminates the need of dividing the magnet.

As illustrated in FIG. 1, the permanent magnets 51a and 51b installed in the respective permanent magnet spaces 14a and 14b each have a flat plate-like shape and extend circumferentially and axially. The permanent magnet 51a and the permanent magnet 51b are arranged in parallel to each other and spaced apart from each other radially. Further, the inner permanent magnet 51b in the radial direction and outer permanent magnet 51a in the radial direction are arranged so as to have the same polarity. That is, the inner permanent magnet 51b and outer permanent magnet 51a are arranged in a first arrangement in which the radial direction inner surfaces of both the inner permanent magnet 51b and outer permanent magnet 51a have an N-pole and the radial direction outer surfaces thereof have an S-pole or in a second arrangement in which the radial direction inner surfaces have an S-pole and the radial direction outer surfaces have an N-pole. Further, when one of permanent magnets adjacent to each other circumferentially has the first arrangement, the other thereof has the second arrangement.

The stator 20 has a stator core 21 and armature coils 24. The stator core 21 has flat plates laminated axially. Stator slots 23 extending axially are formed radially inside the laminated plates so as to be opposed to the outer surface of the rotor 10 radially with a gap 25 interposed therebetween. That is, a plurality of stator teeth 22 protruding inward are formed radially inside the stator core 21. The armature coils 24 are wound around each of the stator teeth 22.

Radial directions at both ends of the circumferential angle region in the circumferential direction are defined as q-axis directions, and a radial direction at a center of the circumferential angle region is defined as a d-axis direction. Further, in FIG. 1, a magnetic flux φ1 formed by the permanent magnets 51a and 51b is denoted by dashed double-dotted lines.

In FIG. 1, as the magnetic flux φ1, a clockwise magnetic flux and a counterclockwise magnetic flux are illustrated. For example, the clockwise magnetic flux φ1 forms closed clockwise magnetic flux lines with unillustrated permanent magnets provided in an unillustrated circumferential angle region positioned to the right of the illustrated circumferential angle region. Further, the counterclockwise magnetic flux φ1 forms closed counterclockwise magnetic flux lines with unillustrated permanent magnets provided in an unillustrated circumferential angle region positioned to the left of the illustrated circumferential angle region. In terms of the radial direction, the magnetic flux φ1 is formed along the d-axis.

On the other hand, a magnetic flux φ2 of a reluctance component formed by a rotating magnetic field generated in the stator core 21 does not pass through the radially outer flux barriers 31a and radially inner flux barriers 31b, which are formed in the rotor core 12 and serve as the magnetic resistance, but is formed along a pathway of the rotor core 12 between the radially outer flux barriers 31a and radially inner flux barriers 31b. Thus, in terms of the radial direction, the magnetic flux φ2 is formed in the q-axis.

The magnetic field formed by the reluctance component magnetic flux φ2 is reduced toward a farther side from the stator 20, that is, toward the radially inside. The magnetic field formed by the magnetic flux φ2 can be a reverse magnetic field having a demagnetization effect on the permanent magnets 51a and 51b. Thus, the strength of the reverse magnetic field acting on the radially outer permanent magnet 51a is greater than the strength of the reverse magnetic field acting on the radially inner permanent magnet 51b.

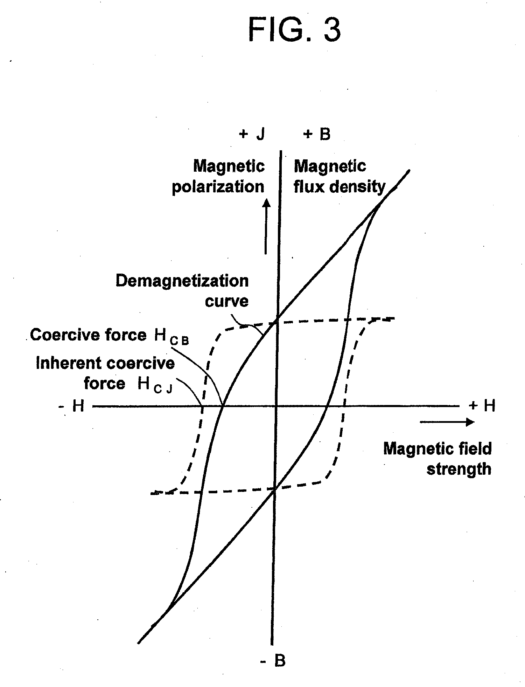

FIG. 3 is a view illustrating an example of magnetic history curve of a permanent magnet. The horizontal axis represents a strength of a magnetic field H, and the vertical axis represents a magnetic flux density B. A part located in the second quadrant of a B-H curve (denoted by solid lines) having hysteresis characteristics, i.e., a demagnetization curve, shows a relationship between a magnetic field strength when a magnetic field is applied in the reverse direction and a total magnetic flux density. A magnetic field strength having a magnetic flux density of 0, that is, a coercive force H_{CB} which is an intersection with the horizontal axis corresponds to the demagnetization resistance which is a yield strength of the permanent magnet to the demagnetization effect and is thus called "demagnetization resistance".

When a magnetic polarization J calculated from a relationship of B = µoH + J (µo is a permeability of vacuum) is plotted on the vertical axis, a J-H curve representing a relationship between the magnetic polarization J and the strength of the magnetic field H is obtained as denoted by dashed lines of FIG. 3. An inherent coercive force H_{CJ} which is an intersection of the demagnetization curve which is a part of the J-H curve located in the second quadrant and the horizontal axis line is a value inherent to a magnetic material and serves as an index of the demagnetization resistance of the magnetic material as a magnet. On the other hand, the coercive force H_{CB} depends not only on the magnetic material but also on the shape of the magnet.

Thus, in a region where the reverse magnetic field is large, it is necessary to use a permanent magnet having a large coercive force H_{CB} or inherent coercive force H_{CJ}, that is, a large demagnetization resistance. Conversely, in a region where the reverse magnetic field is small, a magnet having a small coercive force H_{CB} or a small inherent coercive force H_{CJ} corresponding to the small reverse magnetic field may be used.

In the present embodiment, a permanent magnet having the coercive force H_{CB} or inherent coercive force H_{CJ} that satisfies a required demagnetization resistance at the both outside and inside in the radial direction is used. That is, a tolerance against a level required for the radially outer permanent magnet 51a is made almost equal to a tolerance against a level required for the radially inner permanent magnet 51b. Specifically, the coercive force H_{CB} or inherent coercive force H_{CJ} of the radially inner permanent magnet 51b is made smaller than the coercive force H_{CB} or inherent coercive force H_{CJ} of the radially outer permanent magnet 51a.

That is, the demagnetization resistance of the radially inner permanent magnet 51b is smaller than that of the radially outer permanent magnet 51a. The same can be said for a case where the permanent magnets are arranged radially in three or more rows. Basically, the demagnetization resistance monotonically decreases from the outermost permanent magnet to the innermost permanent magnet. For example, assume a case where four permanent magnets A (the outermost in the radial direction), B (the second in the radial direction), C (the third in the radial direction), and D (the innermost in the radial direction) are provided. The demagnetization resistances of the permanent magnets A, B, C, and D are assumed to be Y_{A}, Y_{B}, Y_{C}, and Y_{D}, respectively. Examples of the monotonic decrease include a case where Y_{A} > Y_{B} > Y_{C} > Y_{D}, Y_{A} > Y_{B} = Y_{C} = Y_{D}, Y_{A} = Y_{B} > Y_{C} = Y_{D}, Y_{A} = Y_{B} = Y_{C} > Y_{D}, Y_{A} > Y_{B} > Y_{C} = Y_{D}, Y_{A} > Y_{B} = Y_{C} > Y_{D}, and Y_{A} = Y_{B} > Y_{C} > Y_{D}.

As a method of changing the inherent coercive force H_{CJ} of the permanent magnet, a method of changing the material type of the permanent magnet is known. Further, as a method of changing the coercive force H_{CB} of the permanent magnet, a method of changing the shape of the permanent magnet is known.

The types of the material for the permanent magnet include a neodymium magnet having a high Dy (dysprosium) content, a neodymium magnet having a low Dy content, a ferrite magnet, and the like. Among the above, the inherent coercive force H_{CJ} of the neodymium magnet having a high Dy content is the largest; however, it costs relatively high. Further, among the above, the inherent coercive force H_{CJ} of the ferrite magnet is the smallest; however, it costs relatively low. Thus, by using the ferrite magnet at least as the innermost permanent magnet and using the same as the permanent magnets outside the innermost one as much as possible, cost reduction can be achieved.

Further, by changing the thickness of the permanent magnet, the coercive force H_{CB} can be adjusted. In general, by increasing the magnet width and reducing the magnet thickness, a larger amount of magnetic flux can be derived from a smaller amount of magnets. However, when the thickness of the permanent magnet is reduced, the coercive force H_{CB} is also reduced, so that a certain thickness or more needs to be ensured. Thus, in the radially outer permanent magnet 51a on which a large reverse magnetic field acts, the magnet thickness (size along the radial direction) is increased in accordance with the magnitude of the reverse magnetic field, and the magnet width (size along the circumferential direction) is reduced by that amount. On the other hand, in the radially inner permanent magnet 51b on which a small reverse magnetic field acts, the magnet thickness is reduced to the extent that demagnetization does not occur, and the magnet width is increased. The increase in the magnet width increases the amount of magnetic flux, thus allowing effective use of a magnetic torque.

In the above conventional approach, the radially inner magnet and the radially outer magnet are of the same type, so that when the type of the permanent magnet is selected so as to satisfy the demagnetization resistance of the radially outer permanent magnet, the demagnetization resistance of the radially inner permanent magnet becomes excessive. In the present embodiment, by changing the type of the magnet depending on the installation place, by appropriately selecting the magnet thickness and width, and by using the bridge having as large a magnetic resistance as possible, it is possible to achieve cost reduction while ensuring required demagnetization resistance of each permanent magnet and maintaining equivalent characteristics to those of conventional permanent magnet rotating electrical machines.

### [OTHER EMBODIMENTS]

The present invention is described above by way of an embodiment. However, the embodiment is presented only as an example without any intention of limiting the scope of the present invention.

Furthermore, the above-described embodiment may be put to use in various different ways and, if appropriate, any of the components thereof may be omitted, replaced or altered in various different ways without departing from the spirit and scope of the invention.

Therefore, the above-described embodiment and the modifications made to them are within the spirit and scope of the present invention, which is specifically defined by the appended claims, as well as their equivalents.

## Claims

1. A permanent magnet rotor (10) comprising:
a rotor shaft (11) rotatably supported and extending axially at its rotation axis;
a rotor core (12), fixed to the rotor shaft, having a plurality of flat steel plates laminated axially, having at least two sets of flux barriers (31a, 31b) at different radial distances with respect to the shaft and at least two corresponding sets of permanent magnet spaces (14a, 14b) placed between the flux barriers (31a, 31b) formed in a convex curved shape in a direction toward the rotor shaft (11), and having bridges (42a, 42b) between the flux barriers (31a, 31b) and the permanent magnet spaces (14a, 14b), **characterized by** the width of the central region of each magnet space (14a, 14b) is thinner in a radial direction than the width of both end regions of the magnet space (14a, 14b); and
permanent magnets (41a, 41b) are disposed in the respective central regions of the permanent magnet spaces (14a, 14b), wherein
the demagnetization resistance of the permanent magnets (41a, 41b) decreases monotonically from outer side to inner side in the radial direction.

2. The permanent magnet rotor (10) according to claim 1, wherein
the permanent magnets (41a, 41b) include different materials from each other.

3. The permanent magnet rotor (10) according to claims 1 and2, wherein
the permanent magnets (41a, 41b) at the radially innermost position at least include a ferrite magnet.

4. The permanent magnet rotor (10) according to any one of claims 1 to 3, wherein
the thickness of the permanent magnet disposed radially outer side is equal to or larger than the thickness of the permanent magnet disposed radially inner side, and the width of the permanent magnet disposed radially outer side is equal to or smaller than the width of the permanent magnet disposed radially inner side.

5. A permanent magnet rotating electrical machine (100) comprising:
the permanent magnet rotor (10) of any one of claims 1 to 4; and
a stator core (21) disposed outside of the rotor core (12) with a gap (25) therebetween, the stator core (21) including a plurality of stator teeth (22) spaced apart from each other circumferentially, the stator teeth (22) extending axially and protruding radially inward, and armature windings wound around the stator teeth (22).

## Patentansprüche

1. Dauermagnetrotor (10), umfassend:
eine Rotorwelle (11), die drehbar gelagert ist und sich an ihrer Drehachse axial erstreckt;
einen an der Rotorwelle befestigten Rotorkern (12), der eine Mehrzahl von axial laminierten flachen Stahlplatten aufweist, der mindestens zwei Sätze von Flusssperren (31a, 31b) in unterschiedlichen radialen Entfernungen bezüglich der Welle und mindestens zwei entsprechende Sätze von Dauermagnetbereichen (14a, 14b), die zwischen den in einer Richtung zu der Rotorwelle (11) in einer konvex gekrümmten Form gebildeten Flusssperren (31a, 31b) platziert sind, aufweist, und der Brücken (42a, 42b) zwischen den Flusssperren (31a, 31b) und den Dauermagnetbereichen (14a, 14b) aufweist, **dadurch gekennzeichnet, dass** die Breite der zentralen Region jedes Magnetbereichs (14a, 14b) in einer radialen Richtung dünner als die Breite beider Endregionen des Magnetbereichs (14a, 14b) ist; und
Dauermagnete (41a, 41b), die in den entsprechenden zentralen Regionen der Dauermagnetbereiche (14a, 14b) angeordnet sind, wobei
der Entmagnetisierungswiderstand der Dauermagnete (41a, 41b) in der radialen Richtung von einer Außenseite zu einer Innenseite monoton abnimmt.

2. Dauermagnetrotor (10) nach Anspruch 1, wobei
die Dauermagnete (41a, 41b) sich voneinander unterscheidende Materialien einschließen.

3. Dauermagnetrotor (10) nach den Ansprüchen 1 und 2, wobei
die Dauermagnete (41a, 41b) an der radial innersten Position zumindest einen Ferritmagneten einschließen.

4. Dauermagnetrotor (10) nach einem der Ansprüche 1 bis 3, wobei
die Dicke des an der radial äußeren Seite angeordneten Dauermagneten gleich wie oder größer als die Dicke des an der radial inneren Seite angeordneten Dauermagneten ist und die Breite des an der radial äußeren Seite angeordneten Dauermagneten gleich wie oder kleiner als die Breite des an der radial inneren Seite angeordneten Dauermagneten ist.

5. Drehende elektrische Dauermagnet-Maschine (100), umfassend:
den Dauermagnetrotor (10) eines der Ansprüche 1 bis 4; und
einen Statorkern (21), der außerhalb des Rotorkerns (12) mit einem Spalt (25) zwischen diesen angeordnet ist, wobei der Statorkern (21) eine Mehrzahl von umlaufend voneinander beabstandeten Statorzähnen (22), wobei die Statorzähne (22) sich axial erstrecken und nach radial innen vorstehen, und um die Statorzähne (22) gewickelte Ankerwicklungen einschließt.

## Revendications

1. Rotor à aimants permanents (10) comprenant :
un arbre de rotor (11) supporté de manière rotative et s'étendant axialement au niveau de son axe de rotation ;
un noyau de rotor (12), fixé à l'arbre de rotor, ayant une pluralité de plaques d'acier plates stratifiées axialement, ayant au moins deux ensembles de barrières de flux (31a, 31b) à différentes distances radiales par rapport à l'arbre et au moins deux ensembles correspondants d'espaces d'aimants permanents (14a, 14b) placés entre les barrières de flux (31a, 31b) formés en une forme incurvée convexe dans une direction vers l'arbre de rotor (11), et ayant des ponts (42a, 42b) entre les barrières de flux (31a, 31b) et les espaces d'aimants permanents (14a, 14b),
**caractérisé en ce que** la largeur de la région centrale de chaque espace d'aimant (14a, 14b) est plus mince dans une direction radiale que la largeur des deux régions d'extrémité de l'espace d'aimant (14a, 14b) ; et
des aimants permanents (41a, 41b) sont disposés dans les régions centrales respectives des espaces d'aimants permanents (14a, 14b), dans lequel
la résistance à la démagnétisation des aimants permanents (41a, 41b) diminue de manière monotone du côté extérieur au côté intérieur dans la direction radiale.

2. Rotor à aimants permanents (10) selon la revendication 1, dans lequel
les aimants permanents (41a, 41b) incluent des matériaux différents les uns des autres.

3. Rotor à aimants permanents (10) selon les revendications 1 et 2, dans lequel
les aimants permanents (41a, 41b) dans la position radialement la plus intérieure incluent au moins un aimant en ferrite.

4. Rotor à aimants permanents (10) selon l'une quelconque des revendications 1 à 3, dans lequel
l'épaisseur de l'aimant permanent disposé du côté radialement extérieur est égale ou supérieure à l'épaisseur de l'aimant permanent disposé du côté radialement intérieur, et la largeur de l'aimant permanent disposé du côté radialement extérieur est égale ou inférieure à la largeur de l'aimant permanent disposé radialement du côté intérieur.

5. Machine électrique rotative à aimants permanents (100) comprenant :
le rotor à aimants permanents (10) selon l'une quelconque des revendications 1 à 4 ; et
un noyau de stator (21) disposé à l'extérieur du noyau de rotor (12) avec un espace (25) entre eux, le noyau de stator (21) incluant une pluralité de dents de stator (22) espacées les unes des autres circonférentiellement, les dents de stator (22) s'étendant axialement et faisant saillie radialement vers l'intérieur, et des enroulements d'induit enroulés autour des dents de stator (22).
